# FASCICULE DE BREVET EUROPEEN

(11) **EP 3 647 154 B1**
(45) Date de publication et mention de la délivrance du brevet: **24.05.2023**
(21) Numéro de dépôt: 18203512.1
(22) Date de dépôt: 30.10.2018
(51) Int. Cl.: B62B 3/02, B62B 3/00, B62B 3/16

(54) **CHARIOT PLIABLE EN PLASTIQUE**
FALTBARER ROLLWAGEN AUS PLASTIK
FOLDABLE PLASTIC TROLLEY

(43) Date de publication de la demande: 06.05.2020
(73) Titulaire: TheGreenFlux, 69006 Lyon (FR)
(72) Inventeur: DUBLY, Grégory, 69006 Lyon (FR); DUBLY, Frédéric, 69006 Lyon (FR)
(74) Mandataire: Germain Maureau

(56) Documents cités:
- EP-A1- 0 639 506
- EP-A2- 2 254 801
- WO-A1-2007/090469
- DE-B3-102005 037 126
- FR-A1- 3 068 679

## Description

L'invention est relative à un chariot conteneur fermé dont les quatre parois latérales sont pliables.

Un chariot conteneur, aussi appelé roll-container, est généralement un chariot métallique, ajouré, doté de roulettes, permettant de conditionner des produits et de faciliter leurs transports. En particulier, de tels chariots conteneurs sont chargés dans un entrepôt puis transportés par camion afin d'amener des articles destinés à la vente au niveau des rayons sur lesquels ils seront présentés. Une fois déchargés de leurs articles, ces chariots conteneurs sont renvoyés à l'entrepôt par camion.

Afin de limiter les coûts associés au trajet retour, il est intéressant de pouvoir minimiser le volume des chariots conteneurs vides.

Un chariot conteneur pliable est dit dans une position dépliée lorsque les parois délimitent, entre elles, un volume destiné au chargement ou déchargement d'articles.

Un chariot conteneur pliable est dit dans une position repliée lorsque les parois sont proches les unes des autres sans volume libre entre elles, permettant ainsi un stockage optimisé.

Il existe des solutions connues de chariots conteneurs pliables. L'état de la technique peut être illustré par le document de brevet EP2254801 qui divulgue un chariot conteneur fermé comprenant une paroi de base, une paroi supérieure, deux parois de face pliables sur la paroi de base sur le côté intérieur du conteneur et deux parois latérales pliables en deux éléments sur la paroi de base.

Lorsque le chariot conteneur est dans une position dépliée, le volume délimité par ses parois est par la suite désigné comme étant le côté intérieur du chariot conteneur. Inversement, les parties du chariot qui ne sont pas en regard du côté intérieur du chariot conteneur sont désignées comme étant le côté extérieur.

Ce dispositif a l'inconvénient de présenter une ouverture de chargement sur le sommet du conteneur. Le déchargement des articles se réalise par l'ouverture de la paroi de base par gravité. En effet, l'ensemble des parois de face se plient du côté intérieur vers le côté extérieur du conteneur. Ainsi, si l'une des parois de face du chariot conteneur n'est pas en position dépliée à l'origine, la présence des articles chargés dans le chariot conteneur bloque cette paroi de face en position ouverte, c'est-à-dire pliée sur la paroi de base. Seule la paroi de base et la paroi supérieure s'ouvrent vers le côté extérieur permettant ainsi le chargement lorsque le chariot conteneur est en position déplié.

En outre, ce dispositif ne permet pas de créer un chariot conteneur dont la hauteur serait supérieure à la longueur ou à la largeur. La géométrie du chariot conteneur est contrainte par l'emboitement des parois lorsque le chariot conteneur est en position repliée. Cela impose que la hauteur soit toujours inférieure à la longueur ou à la largeur du chariot conteneur. En particulier, si la hauteur du chariot conteneur est supérieure à sa largeur, chacune des faces latérales, formées de deux éléments, se replie sur plus de la moitié de la paroi de base et ainsi s'entrechoque. Par ailleurs, si la hauteur est supérieure à la longueur, les parois de face en position repliée, vont être plus grandes que la paroi de base.

Par ailleurs, ce dispositif a l'inconvénient de ne pas posséder de roulettes permettant une manutention aisée. Or l'utilisation d'un transpalette n'est pas compatible avec l'ensemble des magasins devant recevoir le chariot conteneur.

Le document EP2 254 801 divulgue un conteneur conçu pour passer d'une position dépliée à une position repliée et inversement comprenant, une paroi de base, une paroi supérieure, deux parois de face chacune mobile en rotation selon un axe parallèle au bord de la paroi de paroi de base suivant lequel elle s'étend, et deux parois latérales chacune mobile en rotation selon un axe parallèle au bord de la paroi de base suivant lequel elle s'étend, chacune des parois latérales étant pliable en au moins deux éléments.

Le document EP0639506A1 divulgue un conteneur de transport avec une paroi de face pliable.

L'invention a pour but de remédier à tout ou partie des inconvénients précités en proposant, un chariot conteneur dont l'ensemble des parois sont pliables et présentant une paroi de chargement latérale.

L'invention est définies dans les revendications et a pour objet un chariot conteneur conçu pour passer d'une position dépliée à une position repliée et inversement comprenant, une paroi de base, une paroi supérieure, deux parois de face chacune mobile en rotation selon un axe parallèle au bord de la paroi de base suivant lequel elle s'étend, et deux parois latérales chacune mobile en rotation selon un axe parallèle au bord de la paroi de base suivant lequel elle s'étend, chacune des parois latérales étant pliable en au moins deux éléments caractérisé en ce qu'au moins une des parois de face est conçue pour être rabattue sur le côté extérieur de la paroi supérieure.

Ainsi, le chariot conteneur, en position dépliée, possède une paroi de face conçue pour être une paroi de chargement ou de déchargement. En effet, la présence d'articles dans le chariot conteneur ne bloque pas la rotation en ouverture ou en fermeture de ladite paroi de face. Le chargement et le déchargement se réalisent latéralement par rapport au chariot conteneur. Ainsi, l'opérateur peut choisir, lors du chargement, la position de l'article pendant son transport et jusqu'à son déchargement. Par conséquent, la manutention latérale permet le conditionnement et le transport d'articles au détail.

Selon une caractéristique de l'invention au moins une paroi de face est pliable en au moins deux panneaux.

Ainsi, la manipulation par un opérateur de la paroi de face est facilitée. De plus, la hauteur des parois de face du chariot conteneur peut être supérieure à la longueur du côté de la paroi supérieure perpendiculaire à son axe de rotation. Cela permet l'adaptation des dimensions du chariot conteneur aux dimensions des articles à conditionner et à transporter.

Selon une caractéristique de l'invention les panneaux de l'au moins une paroi de face sont articulés deux à deux au moyen d'au moins une charnière.

Ainsi, le pliage de l'au moins une paroi de face est facilité.

Selon une caractéristique de l'invention l'autre paroi de face est conçue pour être rabattue sur le côté intérieur de la paroi supérieure dudit chariot conteneur.

Ainsi, lorsque l'opérateur déplie le chariot conteneur, la paroi de face rabattue sur le côté intérieur de la paroi supérieure se met en place facilement par gravité.

Selon une caractéristique de l'invention la paroi supérieure est liée sur deux bords opposés à chacune des parois de face au moyen d'au moins une charnière.

Ainsi, l'opérateur peut rabattre facilement les parois de face.

Selon une caractéristique de l'invention la paroi supérieure est liée sur deux bords opposés à chacune des parois latérales au moyen d'au moins une charnière et en ce que la paroi de base est liée sur deux bords opposés à chacune des parois latérales au moyen d'au moins une charnière.

Ainsi, le passage de la position repliée à la position dépliée est facilité.

Selon une caractéristique de l'invention chacune des parois latérales est pliable en au moins quatre éléments.

Ainsi, la hauteur du chariot conteneur peut être supérieure à la longueur du côté de la paroi de base perpendiculaire à l'axe de rotation des parois latérales.

Selon une caractéristique de l'invention les éléments de chaque paroi latérale sont articulés deux à deux au moyen d'au moins une charnière.

Ainsi, la manipulation des parois latérales est facilitée.

Selon une caractéristique de l'invention au moins un élément d'au moins une paroi latérale comprend au moins un tenon sur le bord venant au contact de l'une des parois de face.

Ainsi, la paroi de face est maintenue sur son extrémité supérieure à la paroi supérieure par une charnière et sur un côté par le tenon présent sur l'élément de la paroi latérale. Ce double maintien renforce la structure du chariot.

Selon une caractéristique de l'invention la longueur des éléments des parois latérales, dans le sens de la hauteur du chariot conteneur en position dépliée, est sensiblement égale à la moitié de la distance qui sépare les deux parois latérales.

Ainsi, le volume du chariot en position repliée est le plus faible possible.

Selon une caractéristique de l'invention la paroi de base comprend au moins un tenon sur le bord venant au contact de l'une des parois de face.

Ainsi, la paroi de face est maintenue sur son extrémité supérieure à la paroi supérieure par une charnière et sur son extrémité inférieure par le tenon présent sur la paroi de base. Ce double maintien renforce la structure du chariot.

Selon une caractéristique de l'invention, la paroi supérieure comprend sur le côté extérieur au moins un élément centreur.

Ainsi lorsqu'un deuxième chariot conteneur est positionné sur le dessus d'un premier chariot conteneur, l'élément centreur permet de stabiliser ledit deuxième chariot conteneur.

Selon une caractéristique de l'invention, l'au moins un élément centreur a une forme en L.

Ainsi l'élément centreur est positionné le long d'un angle de la paroi supérieure.

Selon une caractéristique de l'invention, la paroi inférieure comprend sur le côté extérieur au moins un élément de support.

Ainsi lorsqu'un deuxième chariot conteneur est positionné sur le dessus d'un premier chariot conteneur, l'élément support permet de stabiliser ledit deuxième chariot conteneur.

Selon une caractéristique de l'invention, l'au moins un élément de support d'un premier chariot conteneur coopère avec l'au moins un élément centreur d'un second chariot conteneur lorsque ledit premier chariot conteneur est positionné sur le dessus dudit second chariot conteneur.

Ainsi l'élément centreur du deuxième chariot conteneur vient au contact de l'élément support du premier chariot conteneur, favorisant la stabilité de l'ensemble. Les chariots conteneurs peuvent être en position dépliée ou repliée.

Selon une caractéristique de l'invention, l'au moins un élément de support d'un premier chariot conteneur coopère par complémentarité de forme avec l'au moins un élément centreur d'un second chariot conteneur lorsque ledit premier chariot conteneur est positionné sur le dessus dudit second chariot conteneur.

Selon une caractéristique de l'invention, au moins une charnière est une charnière double action.

Une charnière à double action est une charnière comprenant deux axes de rotation parallèles. L'utilisation de charnières à double action permet que les parois du chariot conteneur soient planes lorsque celui-ci est en position dépliée. Ainsi l'axe de rotation de la charnière ne fait pas sailli par rapport aux parois.

Selon une caractéristique de l'invention, la paroi de base est équipée d'au moins trois roulettes.

Ainsi, le chariot conteneur peut être déplacé facilement par un opérateur sans mise en oeuvre de moyens mécaniques supplémentaires.

Selon une caractéristique de l'invention, la paroi supérieure et la paroi de face, conçue pour être rabattue sur le côté extérieur de la paroi supérieure dudit chariot conteneur, ménagent au moins trois orifices, lorsque le chariot conteneur est en position repliée, permettant de maintenir les roulettes d'un second chariot conteneur placé sur le dessus dudit premier.

Ainsi, les roulettes d'un deuxième chariot conteneur peuvent être bloquées lorsque celui-ci est positionné sur le dessus d'un premier chariot conteneur. Ce blocage facilite le transport d'un empilement de chariots conteneurs en position repliée.

Selon une caractéristique de l'invention, au moins une paroi de face comprend au moins un système de verrouillage.

Ainsi, les parois de face du chariot conteneur peuvent être verrouillées en position dépliée pour empêcher l'ouverture du chariot conteneur lors du transport par exemple.

Selon une caractéristique de l'invention, la paroi de base du chariot conteneur comprend au moins un élément de fixation mobile entre une position déployée et une position rétractée.

Ainsi, il est possible de relier deux chariots conteneurs l'un derrière l'autre en positionnant une tige par exemple entre les éléments de fixation. Les chariots conteneurs forment alors une unité à la manière des wagons d'un train. Par ailleurs, lors du transport des chariots conteneurs, l'élément de fixation est rétracté dans la paroi de base de sorte que le chariot conteneur tient un volume minimum.

Selon une caractéristique de l'invention, le chariot conteneur comprend au moins une sangle d'arrimage destinée à lier latéralement un premier chariot conteneur à un deuxième chariot conteneur.

Ainsi, deux chariots conteneurs positionnés côte à côte peuvent être maintenus latéralement ensemble.

Selon une caractéristique de l'invention, la sangle d'arrimage est positionnée sur l'épaisseur de la paroi de base.

L'invention sera mieux comprise, grâce à la description ci-après, qui se rapporte à un ou plusieurs modes de réalisation selon la présente invention, donné à titre d'exemples non limitatifs et expliqués avec référence aux dessins schématiques annexés, dans lesquels :
- la figure 1 est une vue d'une paroi de face du dispositif selon un premier mode de réalisation l'invention ;
- la figure 2 est une représentation en perspective du dispositif selon le premier mode de réalisation en position dépliée ;
- la figure 3 est une représentation en perspective du dispositif selon le premier mode de réalisation dont une paroi de face est pliée et rabattue sur le côté extérieur du chariot conteneur;
- la figure 4 est une représentation en perspective du dispositif selon le premier mode de réalisation en position dépliée ;
- la figure 5 est une vue d'une paroi de face du dispositif selon le premier mode de réalisation;
- la figure 6 est une vue en perspective du dispositif selon le premier mode de réalisation, les deux parois de face étant en partie pliées et en partie rabattues;
- la figure 7 est une représentation en perspective de deux dispositifs selon le premier mode de réalisation empilés ;
- la figure 8 est un agrandissement d'un système de verrouillage en position déverrouillée selon un premier mode de réalisation;
- la figure 9 est un agrandissement d'un système de verrouillage en position verrouillée selon le premier mode de réalisation;
- la figure 10 est une représentation en perspective d'un dispositif selon un deuxième mode de réalisation en position dépliée ;
- la figure 11 est une représentation en perspective du dispositif selon le deuxième mode de réalisation dont une paroi de face est pliée et rabattue sur le côté extérieur du chariot conteneur;
- la figure 12 est une vue de dessus du dispositif selon le deuxième mode de réalisation ;
- la figure 13 est une représentation en perspective de deux dispositifs selon le deuxième mode de réalisation empilés ;
- la figure 14 est une vue d'une charnière ;
- la figure 15 est une vue d'une charnière ;
- la figure 16 est une vue d'une charnière ;
- la figure 17 est un agrandissement d'un système de verrouillage selon un deuxième mode de réalisation;
- la figure 18 est une vue des éléments de fixation de deux dispositifs ;
- la figure 19 est une vue de dessus de trois dispositifs reliés ensemble;
- la figure 20 est une vue de deux dispositifs reliés par une sangle d'arrimage;
- la figure 21 est une vue d'une sangle d'arrimage ;

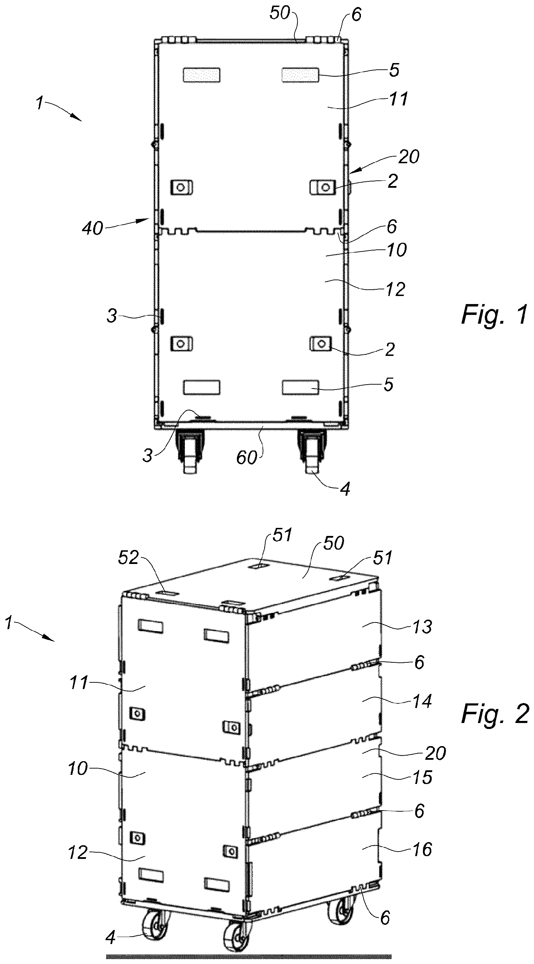

Les figures 1 à 6 représentent un chariot conteneur 1 selon un premier mode de réalisation de l'invention en position dépliée. Le chariot conteneur 1 est constitué d'une paroi de base 60, d'une paroi supérieure 50, de deux parois de face 10, 30, de deux parois latérales 20, 40, et de quatre roulettes 4.

La paroi de base 60 est un support plan rectangulaire sur lequel les roulettes 4 sont fixées sur son côté extérieur. En outre, les parois latérales 20, 40 sont attachées de manière pivotante au moyen de charnières 6 sur le côté intérieur de la paroi de base 60. Les charnières 6 sont des charnières comprenant un seul axe de rotation. Les deux parois latérales 20, 40 sont positionnées sur deux bords de la paroi de base 60 en regard l'un de l'autre. La paroi de base 60 possède sur ses deux bords libres du côté intérieur des tenons 61.

La paroi supérieure 50 est un espace plan rectangulaire sur lequel les parois de face 10, 30 et les parois latérales 20, 40 sont attachées de manière pivotante au moyen de charnières 6. L'ensemble formé par la paroi supérieure 50, les parois latérales 20, 40 et la paroi de base 60 est, en position dépliée, un parallélépipède ouvert. Ainsi, les parois latérales 20, 40 lient les côtés les plus long de la paroi de base 60 avec les côtés les plus longs de la paroi supérieure 50. Les parois de face 10, 30 sont positionnées selon les deux largeurs de la paroi supérieure 50. En outre, la paroi supérieure 50 possède deux orifices 51 suivant l'axe de sa longueur et deux orifices 52 suivant l'axe de sa largeur.

Les parois latérales 20, 40 relient la paroi de base 60 à la paroi supérieure 50 et comprennent chacune quatre éléments 13, 14, 15, 16, 17, 18, 19, 21. Les éléments 13, 14, 15, 16, 17, 18, 19, 21 des parois latérales 20, 40 présentent à chacune de leurs extrémités des tenons 22. Les éléments des parois latérales sont pliables et rabattables au moyen de charnières.

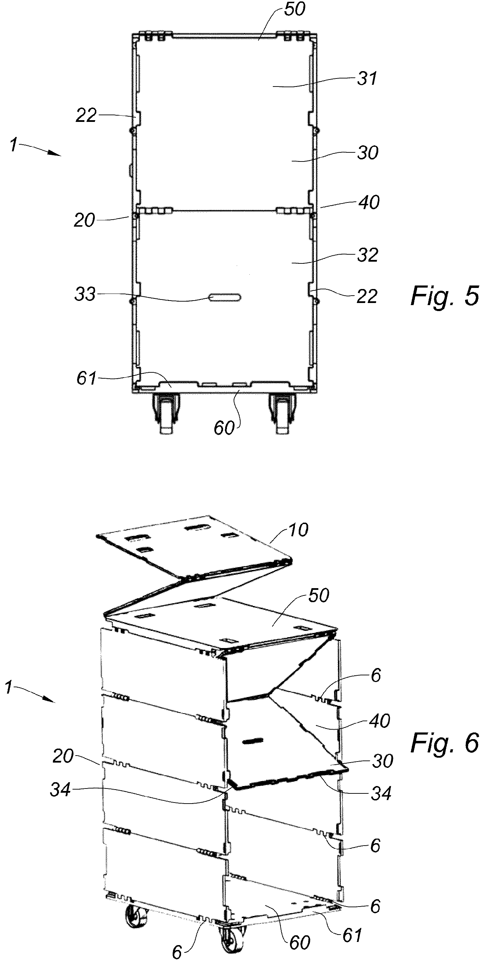

Comme représenté en figure 6, l'une des parois de face 10 se rabat sur le côté extérieur du chariot conteneur. Elle sera nommée la paroi de face avant 10 dans la suite de la description, alors que l'autre paroi de face 30 sera appelée la paroi de face arrière 30.

La paroi de face avant 10 est un agencement d'un panneau supérieur 11 relié par deux charnières 6 à un panneau inférieur 12. Le panneau supérieur 11 étant relié par deux charnières 6 à la paroi supérieure 50 du chariot conteneur 1. Chaque panneau 11, 12 de la paroi de face 10 possède sur son côté extérieur deux systèmes de verrouillage 2 et deux orifices 5 selon l'axe de la largeur de la paroi de face avant 10. En outre, les panneaux 11, 12 de la paroi de face avant 10 comportent des évidements 3 sur les bords libres destinés à recevoir les tenons 61, 22 des parois latérales 20, 40 et de la paroi de base 60. Ainsi en position dépliée, la paroi de face avant est maintenue sur ses quatre côtés.

La paroi de face arrière 30 est un agencement d'un panneau supérieur 31 relié par deux charnières 6 à un panneau inférieur 32. Le panneau supérieur 31 est relié par deux charnières 6 à la paroi supérieure 50 du chariot conteneur 1. La paroi de face arrière 30 possède sur son côté intérieur deux systèmes de verrouillage 2 (non visible sur les figures) et un orifice 33 selon l'axe de la largeur de la paroi de face arrière 30 servant de poignée pour déplacer le chariot conteneur 1. En outre, les panneaux 31, 32 de la paroi de face arrière comportent des évidements 34 sur les bords libres destinés à recevoir les tenons 61, 22 des parois latérales 20, 40 et de la paroi de base 60 en position dépliée. Ainsi, la paroi de face arrière est maintenue sur ses quatre côtés en position dépliée.

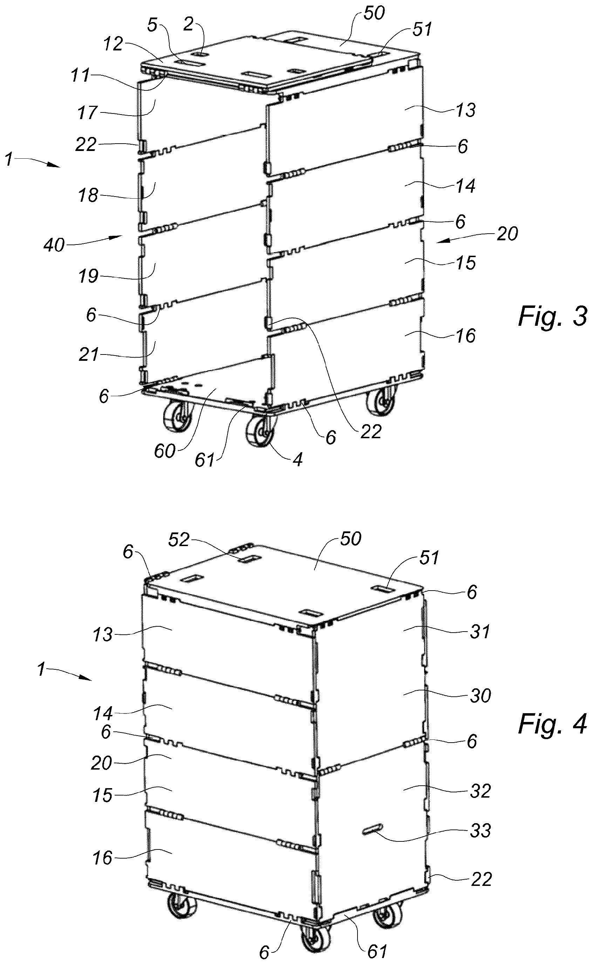

La figure 3 représente une vue en perspective du dispositif 1 en position dépliée dont la paroi de face avant 10 est pliée et rabattue sur le côté extérieur de la paroi supérieure 50 du chariot conteneur 1. Le panneau supérieur 11 pivote selon l'axe des charnières 6 pour se positionner au contact de la paroi supérieure 50, alors que le panneau inférieur 12 pivote selon l'axe de la charnière 6 pour recouvrir le panneau supérieur 11. La paroi de face avant 10 ainsi pliée et rabattue, l'intérieur du chariot conteneur 1 est accessible à un opérateur afin de réaliser le chargement ou le déchargement d'un article. Les orifices 5 des panneaux de la paroi de face avant 10 se superposent et viennent recouvrir les orifices 52 suivant l'axe de la largeur de la paroi supérieure 50. La paroi supérieure 50 n'est pas entièrement cachée par les panneaux 11, 12 de la paroi de face avant 10. Les orifices 51 suivant l'axe de la longueur de la paroi supérieure 50 restent visibles.

La figure 6 représente une vue en perspective du chariot conteneur 1 dont les parois de face avant 10 et arrière 30 sont en partie pliées et en partie rabattues. La paroi de face avant 10 se plie en deux panneaux 11, 12 et se rabat sur le côté extérieur de la paroi supérieure 50 et la paroi de face arrière 30 se plie en deux panneaux 31, 32 et se rabat sur le côté intérieur de la paroi supérieure 50. Les parois latérales 20, 40 se plient et se rabattent sur la paroi de base 60 du chariot conteneur 1. Les éléments 16, 21 des parois latérales 20, 40 liées avec la paroi de base 60 viennent en contact avec celle-ci puis les autres éléments 15, 14, 13, 19, 18, 17 s'empilent les uns sur les autres en formant deux tas de quatre éléments.

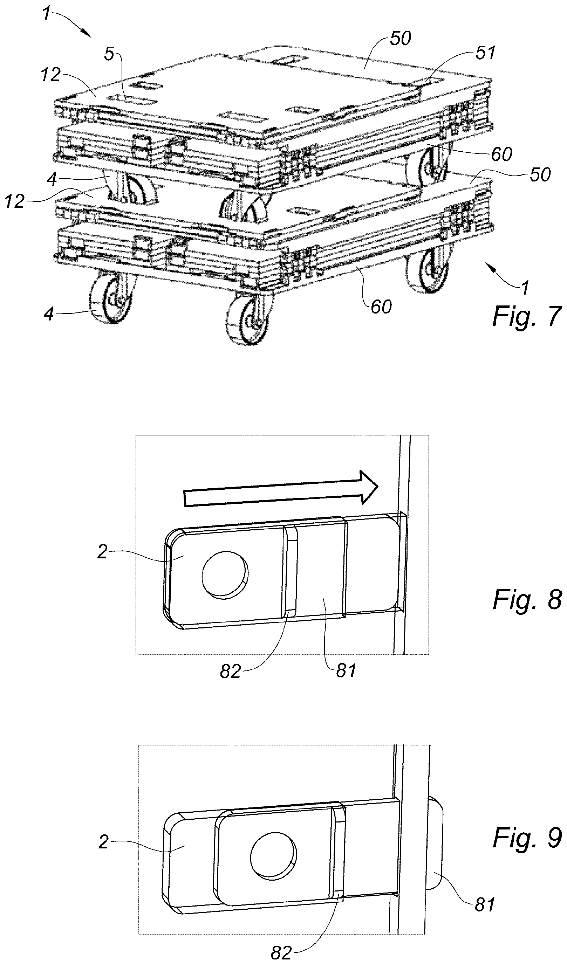

La figure 7 représente deux chariots conteneurs 1 en position repliée et empilés l'un sur l'autre. Les roulettes 4 du chariot conteneur placé sur le dessus viennent se bloquer dans les orifices 5 de la paroi de face avant 10 et dans les orifices 51 de la paroi supérieure 50. Deux roulettes sont bloquées suivant un axe et les deux autres roulettes sont bloquées perpendiculairement aux premières afin d'empêcher tous mouvements un chariot conteneur par rapport à l'autre.

Les figures 8 et 9 sont des agrandissements d'un système de verrouillage 2, selon un premier mode de réalisation, des parois de face avant 10 et arrière 30. Le système de verrouillage 2 comporte un élément coulissant 81 muni d'un organe de préhension 82 permettant de faire passer l'élément coulissant 81 d'une position déverrouillée à une position verrouillée.

Le passage de la position dépliée à la position repliée du chariot conteneur 1 nécessite de déverrouiller puis de plier et rabattre la face avant, ensuite, l'opérateur peut déverrouiller puis plier et rabattre la face arrière, enfin l'opérateur plie et rabat les faces latérales.

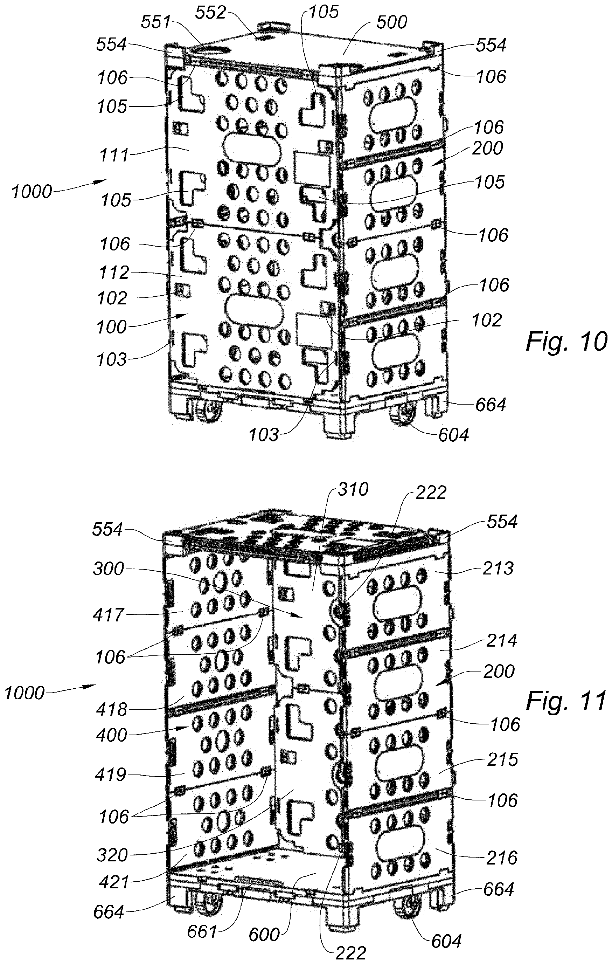

Les figures 10 à 12 représentent un chariot conteneur 1000, selon un deuxième mode de réalisation de l'invention, en position dépliée. Le chariot conteneur 1000 est constitué d'une paroi de base 600, d'une paroi supérieure 500, de deux parois de face 100, 300, de deux parois latérales 200, 400, et de quatre roulettes 604.

La paroi de base 600 est un support plan rectangulaire sur lequel les roulettes 604 sont fixées sur son côté extérieur. En outre, les parois latérales 200, 400 sont attachées de manière pivotante au moyen de charnières doubles actions 106 sur le côté intérieur de la paroi de base 600. Les deux parois latérales 200, 400 sont positionnées sur deux bords de la paroi de base 600 en regard l'un de l'autre. La paroi de base 600 possède sur ses deux bords libres du côté intérieur des tenons 610. Par ailleurs, le coté extérieur de la paroi de base 600 comprend, au niveau des angles, quatre éléments supports 664 en forme de L. Ces éléments supports 664 ont une hauteur inférieure à la hauteur des roulettes 604.

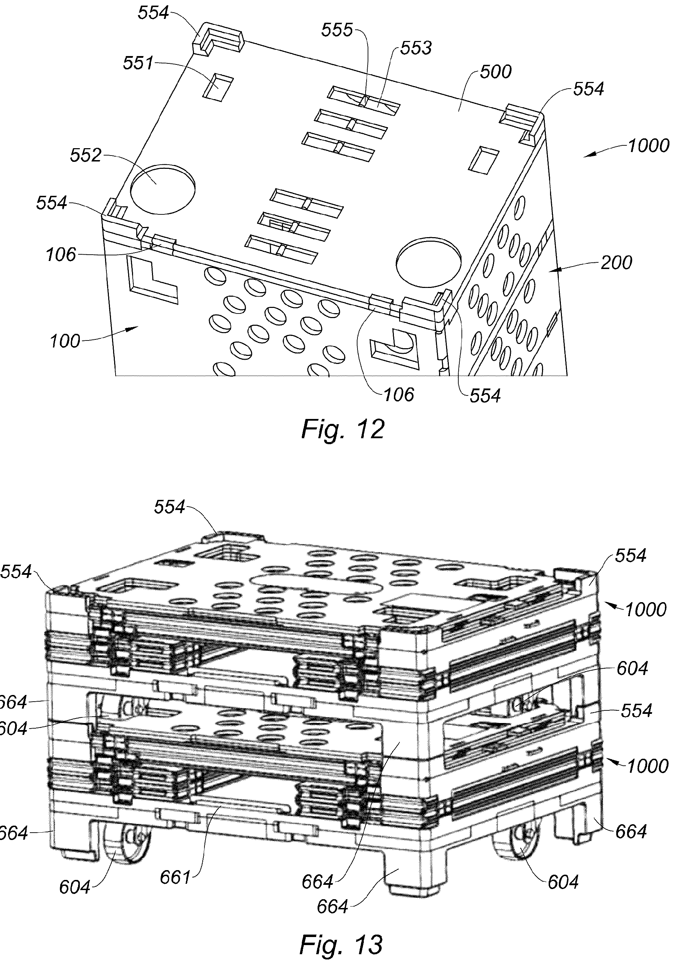

La paroi supérieure 500 est un espace plan rectangulaire sur lequel les parois de face 100, 300 et les parois latérales 200, 400 sont attachées de manière pivotante au moyen de charnières doubles actions 106. L'ensemble formé par la paroi supérieure 500, les parois latérales 200, 400 et la paroi de base 600 est, en position dépliée, un parallélépipède ouvert. Ainsi, les parois latérales 200, 400 lient les côtés les plus courts de la paroi de base 600 avec les côtés les plus courts de la paroi supérieure 500. Les parois de face 100, 300 sont positionnées selon les deux longueurs de la paroi supérieure 500. En outre, comme représenté en figure 12, la paroi supérieure 500 possède deux orifices circulaires 551 et deux orifices rectangulaires 552 permettant d'accueillir les roulettes 604 d'un second chariot conteneur qui serait placé sur le dessus dudit chariot conteneur.

Par ailleurs, la paroi supérieure 500 comprend six porte-cintres 553 conçus de sorte que le crochet d'un cintre peut être positionné sur un axe 555 ménagé dans l'épaisseur de la paroi supérieure.

Enfin, le côté extérieur de la paroi supérieure 500 comporte quatre éléments centreurs 554. Chacun des éléments centreurs 554 a une forme de L et est positionné dans un angle de la paroi supérieure 500. Les éléments supports 664 et les éléments centreurs 554 ont une forme complémentaire. Ainsi, lorsque deux chariots conteneurs 1000 sont positionnés l'un sur l'autre, les éléments supports 664 du chariot conteneur placé sur le dessus viennent s'emboiter dans les éléments centreur 554 du chariot conteneur placé dessous.

Les parois latérales 200, 400 relient la paroi de base 600 à la paroi supérieure 500 et comprennent chacune quatre éléments 213, 214, 215, 216, 417, 418, 419, 421. Les éléments 213, 214, 215, 216, 417, 418, 419, 421 des parois latérales 200, 400 présentent à chacune de leurs extrémités des tenons 222. Les éléments des parois latérales sont pliables et rabattables au moyen de charnières doubles actions 106.

Comme représenté en figure 11, l'une des parois de face 100 se rabat sur le côté extérieur du chariot conteneur. Elle sera nommée la paroi de face avant 100 dans la suite de la description, alors que l'autre paroi de face 300 sera appelée la paroi de face arrière 300.

La paroi de face avant 100 est un agencement d'un panneau supérieur 111 relié par deux charnières doubles actions 106 à un panneau inférieur 112. Le panneau supérieur 111 étant relié par deux charnières doubles actions 106 à la paroi supérieure 500 du chariot conteneur 1000. Chaque panneau 111, 112 de la paroi de face 100 possède sur son côté extérieur deux systèmes de verrouillage 102 selon un second mode de réalisation et quatre orifices 105. En outre, les panneaux 111, 112 de la paroi de face avant 100 comportent des évidements 103 sur les bords libres destinés à recevoir les tenons 222, 661 des parois latérales 200, 400 et de la paroi de base 600. Ainsi en position dépliée, la paroi de face avant est maintenue sur ses quatre côtés.

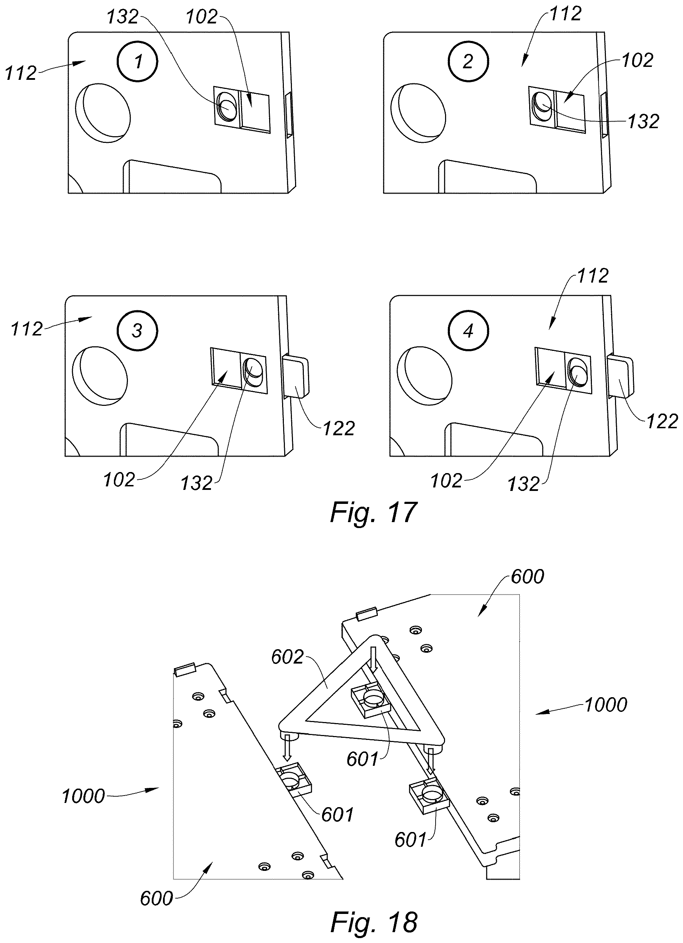

Le système de verrouillage 102 selon un second mode de réalisation est représenté plus particulièrement en figure 17. Pour verrouiller une paroi de face dans une paroi latérale, l'opérateur doit déplacer vers le haut un élément coulissant 132 du système de verrouillage 102. Puis le déplacer vers la paroi latérale. Cette action permet de sortir le penne dormant 122 du système de verrouillage 102. Ensuite, l'opérateur abaisse l'élément mobile 132 et enfin le déplace dans la direction opposée. L'ouverture se réalise en effectuant les opérations inverses.

La paroi de face arrière 300 est un agencement d'un panneau supérieur 310 relié par deux charnières doubles actions 106 à un panneau inférieur 320. Le panneau supérieur 310 est relié par deux charnières doubles actions 106 à la paroi supérieure 500 du chariot conteneur 1. La paroi de face arrière 300 possède sur son côté intérieur deux systèmes de verrouillage 102.

La figure 11 représente une vue en perspective du dispositif 1000 en position dépliée dont la paroi de face avant 100 est pliée et rabattue sur le côté extérieur de la paroi supérieure 500 du chariot conteneur 1000. Le panneau supérieur 111 pivote selon l'axe des charnières doubles actions 106 pour se positionner au contact de la paroi supérieure 500, alors que le panneau inférieur 112 pivote selon l'axe de la charnière 106 pour recouvrir le panneau supérieur 111. La paroi de face avant 100 ainsi pliée et rabattue, l'intérieur du chariot conteneur 1000 est accessible à un opérateur afin de réaliser le chargement ou le déchargement d'un article. Les orifices 105 des panneaux de la paroi de face avant 100 se superposent et viennent recouvrir les orifices 552, 551 de la paroi supérieure 500.

Dans le mode de réalisation représenté par les figure 10 à 12, la paroi de face avant 100 se plie en deux panneaux 111, 112 et se rabat sur le côté extérieur de la paroi supérieure 500 et la paroi de face arrière 300 se plie en deux panneaux 310, 320 et se rabat sur le côté intérieur de la paroi supérieure 500. Les parois latérales 200, 400 se plient et se rabattent sur la paroi de base 600 du chariot conteneur 1000. Les éléments 216, 421 des parois latérales 200, 400 liées avec la paroi de base 600 viennent en contact avec celle-ci puis les autres éléments 215, 214, 213, 419, 418, 417 s'empilent les uns sur les autres en formant deux tas de quatre éléments.

La figure 13 représente deux chariots conteneurs 1000, en position repliée, empilés l'un sur l'autre. Les roulettes 604 du chariot conteneur 1000, placé sur le dessus, viennent se bloquer dans les orifices 551, 552 de la paroi de face avant 100 du chariot conteneur positionné en dessous.

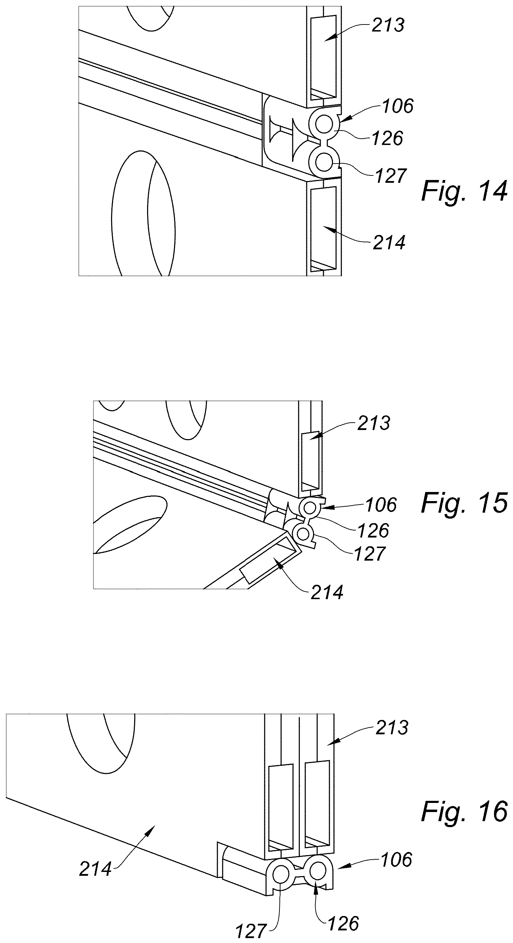

Les figures 14 à 16 présentent une charnière double action 106 montée entre les éléments 213 et 214. La charnière double action comporte deux axes 126, 127 de rotation. Ainsi, lorsque les éléments sont dépliés et qu'ils forment la paroi latérale 200, la charnière double action 106 est dans le prolongement de ladite paroi comme en figure 14. Alors que lorsque les éléments 213, 214 sont repliés, les axes 126, 127 sont inclus dans l'épaisseur des éléments comme en figure 16.

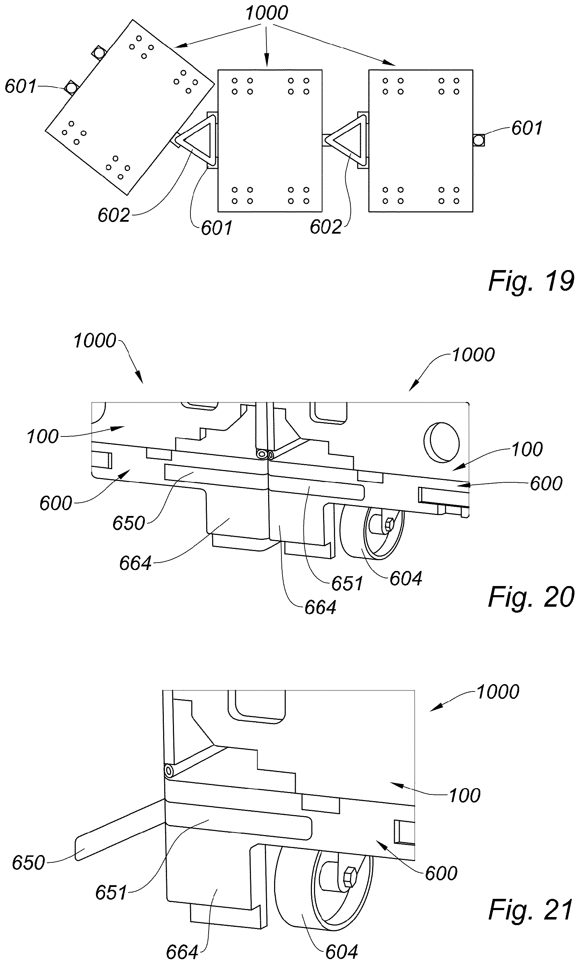

La figure 18 représente la paroi de base 600 de deux chariots conteneurs 1000. Chacune des parois de base 600 comporte deux éléments de fixation 601 sur son bord positionné en regard de la face avant et un élément de fixation 601 sur son bord positionné en regard de la face arrière. Tel que représenté, les éléments de fixation 601 sont en position déployée. Afin de lier les deux chariots conteneurs, un triangle rigide 602 est positionné entre les éléments de fixation 601 des deux chariots conteneurs 1000. De la même manière, il est possible de relier trois chariots conteneurs comme représenté en figure 19. La figure 20 illustre deux chariots conteneurs 1000 reliés latéralement par une sangle d'arrimage 650. La sangle d'arrimage 650 est une bande de fixation auto-agrippante positionnée dans un logement 651 du chariot conteneur sur lequel elle est fixée. Ladite sangle d'arrimage 650 pivote comme illustrée en figure 21 et vient s'accrocher sur une zone spécifique d'un deuxième chariot conteneur permettant de relier les deux chariots conteneurs.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention telle que définie dans les revendications.

## Revendications

1. Chariot conteneur (1 ; 1000) conçu pour passer d'une position dépliée à une position repliée et inversement comprenant, une paroi de base (60 ; 600), une paroi supérieure (50 ; 500), deux parois de face (10, 30 ; 100, 300) chacune mobile en rotation selon un axe parallèle au bord de la paroi de base (60 ; 600) suivant lequel elle s'étend, et deux parois latérales (20, 40 ; 200, 400) chacune mobile en rotation selon un axe parallèle au bord de la paroi de base (60 ; 600) suivant lequel elle s'étend, chacune des parois latérales (20, 40 ; 200, 400) étant pliable en au moins deux éléments (13, 14, 15, 16, 17, 18, 19, 21 ; 213, 214, 215, 216, 417, 418, 419, 421)
**caractérisé en ce qu'**au moins une des parois de face (10; 100) est conçue pour être rabattue sur le côté extérieur de la paroi supérieure (50 ; 500).

2. Chariot conteneur selon la revendication 1, **caractérisé en ce qu'**au moins une paroi de face (10, 30 ; 100, 300) est pliable en au moins deux panneaux (11, 12, 31, 32 ; 111, 112, 310, 320).

3. Chariot conteneur selon l'une quelconque des revendications précédentes, **caractérisé en ce que** l'autre paroi de face (30 ; 300) est conçue pour être rabattue sur le côté intérieur de la paroi supérieure (50; 500) dudit chariot conteneur (1 ; 1000).

4. Chariot conteneur selon l'une quelconque des revendications précédentes, **caractérisé en ce que** la paroi supérieure (50; 500) est liée sur deux bords opposés à chacune des parois latérales (20, 40 ; 200, 400) au moyen d'au moins une charnière (6 ; 106) et **en ce que** la paroi de base (60, 600) est liée sur deux bords opposés à chacune des parois latérales (20, 40 ; 200, 400) au moyen d'au moins une charnière (6 ; 106).

5. Chariot conteneur selon l'une quelconque des revendications précédentes, **caractérisé en ce que** chacune des parois latérales (20, 40 ; 200, 400) est pliable en au moins quatre éléments (13, 14, 15, 16, 17, 18, 19, 21; 213, 214, 215, 216, 417, 418, 419, 421).

6. Chariot conteneur selon l'une quelconque des revendications précédentes, **caractérisé en ce qu'**au moins un élément (13, 14, 15, 16, 17, 18, 19, 21; 213, 214, 215, 216, 417, 418, 419, 421) d'au moins une paroi latérale (20,40; 200, 400) comprend au moins un tenon (22 ; 222) sur le bord venant au contact de l'une des parois de face (10, 30 ; 100, 300).

7. Chariot conteneur selon l'une quelconque des revendications précédentes, **caractérisé en ce que** la paroi de base (60 ; 600) comprend au moins un tenon (61; 661) sur le bord venant au contact de l'une des parois de face (10, 30; 100, 300).

8. Chariot conteneur selon l'une quelconque des revendications précédentes, **caractérisé en ce que** la paroi supérieure (500) comprend sur le côté extérieur au moins un élément centreur (554).

9. Chariot conteneur selon l'une quelconque des revendications précédentes, **caractérisé en ce que** la paroi inférieure (600) comprend sur le côté extérieur au moins un élément de support (664).

10. Chariot conteneur selon l'une quelconque des revendications précédentes prises en combinaison avec la revendication 4, **caractérisé en ce qu'**au moins une charnière est une charnière double action.

11. Chariot conteneur selon l'une quelconque des revendications précédentes, **caractérisé en ce que** la paroi de base (60 ; 600) est équipée d'au moins trois roulettes (4 ; 604).

12. Chariot conteneur selon la revendication 11, **caractérisé en ce que** la paroi supérieure (50 ; 500) et la paroi de face (10; 100), conçue pour être rabattue sur le côté extérieur de la paroi supérieure (50 ; 500) dudit chariot conteneur (1 ; 1000), ménagent au moins trois orifices (5, 51, 52 ; 551, 552, 105), lorsque le chariot conteneur (1 ; 1000) est en position repliée, permettant de maintenir des roulettes d'un second chariot conteneur placé sur le dessus d'un premier chariot conteneur.

13. Chariot conteneur selon l'une quelconque des revendications précédentes, **caractérisé en ce qu'**au moins une paroi de face comprend au moins un système de verrouillage.

14. Chariot conteneur selon l'une quelconque des revendications précédentes, **caractérisé en ce que** la paroi de base du chariot conteneur comprend au moins un élément de fixation mobile entre une position déployée et une position rétractée.

15. Chariot conteneur selon l'une quelconque des revendications précédentes, **caractérisé en ce qu'**il comprend au moins une sangle d'arrimage (650) destinée à lier latéralement un premier chariot conteneur à un deuxième chariot conteneur.

## Patentansprüche

1. Containerwagen (1; 1000), der dafür ausgelegt ist, aus einer aufgeklappten Position in eine zusammengeklappten Position und umgekehrt zu wechseln, umfassend eine Bodenwand (60; 600), eine obere Wand (50; 500), zwei Stirnwände (10, 30; 100, 300), die jeweils um eine Achse parallel zu der Kante der Bodenwand (60; 600), entlang der sie sich erstreckt, drehbar sind, und zwei Seitenwände (20, 40; 200, 400), die jeweils um eine Achse parallel zu der Kante der Bodenwand (60; 600), entlang der sie sich erstreckt, drehbar sind, wobei jede der Seitenwände (20, 40; 200, 400) in mindestens zwei Elemente (13, 14, 15, 16, 17, 18, 19, 21; 213, 214, 215, 216, 417, 418, 419, 421) faltbar ist,
**dadurch gekennzeichnet, dass** mindestens eine der Stirnwände (10; 100) dafür ausgelegt ist, an die Außenseite der oberen Wand (50; 500) umgeklappt zu werden.

2. Containerwagen nach Anspruch 1, **dadurch gekennzeichnet, dass** mindestens eine Stirnwand (10, 30; 100, 300) in mindestens zwei Felder (11, 12, 31, 32; 111, 112, 310, 320) faltbar ist.

3. Containerwagen nach einem der vorhergehenden Ansprüche, **dadurch gekennzeichnet, dass** die andere Stirnwand (30; 300) dafür ausgelegt ist, an die Innenseite der oberen Wand (50; 500) des Containerwagens (1; 1000) umgeklappt zu werden.

4. Containerwagen nach einem der vorhergehenden Ansprüche, **dadurch gekennzeichnet, dass** die obere Wand (50; 500) an zwei gegenüberliegenden Kanten mit jeder der Seitenwände (20, 40; 200, 400) mittels mindestens eines Scharniers (6; 106) verbunden ist, und dadurch, dass die Bodenwand (60, 600) an zwei gegenüberliegenden Kanten mit jeder der Seitenwände (20, 40; 200, 400) mittels mindestens eines Scharniers (6; 106) verbunden ist.

5. Containerwagen nach einem der vorhergehenden Ansprüche, **dadurch gekennzeichnet, dass** jede der Seitenwände (20, 40; 200, 400) in mindestens vier Elemente (13, 14, 15, 16, 17, 18, 19, 21; 213, 214, 215, 216, 417, 418, 419, 421) faltbar ist.

6. Containerwagen nach einem der vorhergehenden Ansprüche, **dadurch gekennzeichnet, dass** mindestens ein Element (13, 14, 15, 16, 17, 18, 19, 21; 213, 214, 215, 216, 417, 418, 419, 421) mindestens einer Seitenwand (20, 40; 200, 400) mindestens einen Zapfen (22; 222) an der Kante umfasst, der mit einer der Stirnwände (10, 30; 100, 300) in Kontakt kommt.

7. Containerwagen nach einem der vorhergehenden Ansprüche, **dadurch gekennzeichnet, dass** die Bodenwand (60; 600) mindestens einen Zapfen (61; 661) an der Kante umfasst, der mit einer der Stirnwände (10, 30; 100, 300) in Kontakt kommt.

8. Containerwagen nach einem der vorhergehenden Ansprüche, **dadurch gekennzeichnet, dass** die obere Wand (500) auf der Außenseite mindestens ein Zentrierelement (554) umfasst.

9. Containerwagen nach einem der vorhergehenden Ansprüche, **dadurch gekennzeichnet, dass** die untere Wand (600) auf der Außenseite mindestens ein Stützelement (664) umfasst.

10. Containerwagen nach einem der vorhergehenden Ansprüche in Verbindung mit Anspruch 4, **dadurch gekennzeichnet, dass** mindestens ein Scharnier ein Doppelfunktionsscharnier ist.

11. Containerwagen nach einem der vorhergehenden Ansprüche, **dadurch gekennzeichnet, dass** die Bodenwand (60; 600) mit mindestens drei Rollen (4; 604) ausgestattet ist.

12. Containerwagen nach Anspruch 11, **dadurch gekennzeichnet, dass** die obere Wand (50; 500) und die Stirnwand (10; 100), die dafür ausgelegt sind, auf die Außenseite der oberen Wand (50; 500) des Containerwagens (1; 1000) umgeklappt zu werden, mindestens drei Öffnungen (5, 51, 52; 551, 552, 105) aufweisen, wenn der Containerwagen (1; 1000) in der zusammengeklappten Position ist, was es ermöglicht, die Rollen eines zweiten Containerwagens, der auf einem ersten Containerwagen platziert ist, zu halten.

13. Containerwagen nach einem der vorhergehenden Ansprüche, **dadurch gekennzeichnet, dass** mindestens eine Stirnwand mindestens ein Verriegelungssystem umfasst.

14. Containerwagen nach einem der vorhergehenden Ansprüche, **dadurch gekennzeichnet, dass** die Bodenwand des Containerwagens mindestens ein Befestigungselement umfasst, das zwischen einer ausgefahrenen Position und einer eingefahrenen Position bewegbar ist.

15. Containerwagen nach einem der vorhergehenden Ansprüche, **dadurch gekennzeichnet, dass** sie mindestens ein Spannband (650) umfasst, das dazu bestimmt ist, einen ersten Containerwagen seitlich mit einem zweiten Containerwagen zu verbinden.

## Claims

1. A container trolley (1; 1000) adapted to pass from an unfolded position to a stowed position and conversely comprising, a base wall (60; 600), an upper wall (50; 500), two face walls (10, 30; 100, 300) each being movable in rotation along an axis parallel to the edge of the base wall (60; 600) along which it extends, and two side walls (20, 40; 200, 400) each being movable in rotation along an axis parallel to the edge of the base wall (60; 600) along which it extends, each of the side walls (20, 40; 200, 400) being foldable into at least two elements (13, 14, 15 ,16, 17, 18, 19, 21; 213, 214, 215, 216, 417, 418, 419, 421)
**characterized in that** at least one of the face walls (10; 100) is adapted to be folded over the outer side of the top wall (50; 500).

2. The container trolley according to claim 1, **characterized in that** at least one face wall (10, 30; 100, 300) is foldable into at least two panels (11, 12, 31, 32; 111, 112, 310, 320).

3. The container trolley according to any one of the preceding claims, **characterized in that** the other face wall (30; 300) is adapted to be folded over the inner side of the upper wall (50; 500) of said container trolley (1;1000).

4. The container trolley according to any one of the preceding claims, **characterized in that** the upper wall (50; 500) is bonded on two opposite edges to each of the side walls (20, 40; 200, 400) by means of at least one hinge (6; 106) and **in that** the base wall (60, 600) is bonded on two opposite edges to each of the side walls (20, 40; 200, 400) by means of at least one hinge (6; 106).

5. The container trolley according to any one of the preceding claims, **characterized in that** each of the side walls (20, 40; 200, 400) is foldable into at least four elements (13, 14, 15, 16, 17, 18, 19, 21; 213, 214, 215, 216, 417, 418, 419, 421).

6. The container trolley according to any one of the preceding claims, **characterized in that** at least one element (13, 14, 15, 16, 17, 18, 19, 21; 213, 214, 215, 216, 417, 418, 419, 421) of at least one side wall (20, 40; 200, 400) comprises at least one stud (22; 222) on the edge which comes into contact with one of the face walls (10, 30; 100, 300).

7. The container trolley according to any one of the preceding claims, **characterized in that** the base wall (60; 600) comprises at least one stud (61; 661) on the edge which comes into contact with one of the face walls (10, 30; 100, 300).

8. The container trolley according to any one of the preceding claims, **characterized in that** the upper wall (500) comprises on the outer side at least one centering element (554).

9. The container trolley according to any one of the preceding claims, **characterized in that** the lower wall (600) comprises on the outer side at least one support element (664).

10. The container trolley according to any one of the preceding claims taken in combination with claim 4, **characterized in that** at least one hinge is a double action hinge.

11. The container trolley according to any one of the preceding claims, **characterized in that** the base wall (60; 600) is equipped with at least three casters (4; 604).

12. The container trolley according to claim 11, **characterized in that** the upper wall (50; 500) and the face wall (10; 100), adapted to be folded over the outer side of the upper wall (50; 500) of said container trolley (1; 1000), provide at least three orifices (5, 51, 52; 551, 552, 105), when the container trolley (1; 1000) is in the stowed position, making it possible to hold the casters of a second container trolley placed on top of a first container trolley.

13. The container trolley according to any one of the preceding claims, **characterized in that** at least one face wall comprises at least one locking system.

14. The container trolley according to any one of the preceding claims, **characterized in that** the base wall of the container trolley comprises at least one fastening element movable between a deployed position and a retracted position.

15. The container trolley according to any one of the preceding claims, **characterized in that** it comprises at least one securing strap (650) intended to laterally bind a first container trolley to a second container trolley.
